# EUROPEAN PATENT SPECIFICATION

(11) **EP 1 079 140 B1**
(45) Date of publication and mention of the grant of the patent: **23.10.2002**
(21) Application number: 00118394.6
(22) Date of filing: 24.08.2000
(51) Int. Cl.: F16F 15/126, C08G 18/65, C09J 175/04, C08K 5/00

(54) **Damper pulley**
Riemenscheibe mit Dämpfungselement
Poulie avec élément d'amortissement

(30) Priority: 27.08.1999 JP 24085499; 25.11.1999 JP 33426299
(43) Date of publication of application: 28.02.2001
(73) Proprietor: TOYO TIRE & RUBBER CO., LTD ., Nishi-ku, Osaka-shi, Osaka 550-0002 (JP)
(72) Inventor: Watanabe, Satomi, Toyoda Gosei Co.,Ltd., Nishikasugai-gun, Aichi (JP); Miyake, Kazutoshi, Toyoda Gosei Co.,Ltd., Nishikasugai-gun, Aichi (JP); Yokoi, Hiroshi, Toyoda Gosei Co.,Ltd., Nishikasugai-gun, Aichi (JP); Imai, Hideyuki, Toyoda Gosei Co.,Ltd., Nishikasugai-gun, Aichi (JP); Naito, Masaki, Toyoda Gosei Co.,Ltd., Nishikasugai-gun, Aichi (JP)
(74) Representative: Kramer, Reinhold, Dipl.-Ing.

(56) References cited:
- US-A- 5 279 900
- DATABASE WPI Section Ch, Week 197543 Derwent Publications Ltd., London, GB; Class A17, AN 1975-71229W XP002154091 & JP 49 124149 A (SHOWA ELECTRIC WIRE CO LTD), 27 November 1974 (1974-11-27)
- PATENT ABSTRACTS OF JAPAN vol. 009, no. 028 (C-264), 6 February 1985 (1985-02-06) & JP 59 172514 A (IDEMITSU KOSAN KK), 29 September 1984 (1984-09-29) & JP 63 015294 B 4 April 1988 (1988-04-04)

## Description

### BACKGROUND OF THE INVENTION

### 1. Field of the Invention

The present invention relates to a damper pulley having a vulcanized rubber member forced and fixed into an annular space formed between a hub and a pulley. In the following description, the mixture proportion is expressed in unit by weight if no notice is given particularly.

### 2. Description of the Related Art

Heretofore, a material such as NR/SBR, SBR, chlorinated IIR, NBR, hydrogenated NBR, or the like, was used as a vulcanized rubber member 16 to be forced and fixed into an annular space formed between a hub 12 and a pulley 14 in a damper pulley 18 as shown in Fig. 1 or Fig. 4(for example, Unexamined Japanese Patent Publication No. Sho. 62-297557).

The vulcanized rubber member made of one of such rubber materials, however, hardly served demands for improvement of heat resistance with temperature rise in an engine room recently.

It was, therefore, conceived that an ethylene-propylene rubber material generally excellent in heat resistance, that is, an ethylene/α-olefin copolymer rubber material was used as the material of the vulcanized rubber member.

The hub and pulley in the damper were, however, generally made of metal (cast iron, aluminum, or the like). Hence, it was found that sufficient adhesion (torque in starting slide of the pulley) was hardly obtained (especially, after heat aging) only by counterforce due to forcing when the vulcanized rubber member 16 made of a non-polar rubber material such as an ethylene-propylene rubber (EOR) material was forced at a predetermined compressibility. Incidentally, the aforementioned non-polar rubber material generally contained a higher fatty acid type processing aid such as stearic acid. Hence, it was conceived that the processing aid was a cause of reduction of adhesion.

### SUMMARY OF THE INVENTION

Upon such circumstances, an object of the present invention is to provide a damper pulley of a forcing and fixing type in which there is little problem in affinity (adhesion) between a hub and a vulcanized rubber member and/or between a pulley and the vulcanized rubber member even under a high-temperature atmosphere.

Another object of the present invention is to provide a damper pulley in which affinity after an early (short term) heat run test is improved greatly.

In a process of putting a great deal of effort into development eagerly to solve the aforementioned problem, the inventors of the present application have found that the problem can be solved when binding layers each made of a moisture-curing adhesive agent (one-fluid type adhesive agent) are interposed in interfaces between a rubber-compounding material and metal. As a result, the inventors have conceived an idea of a damper pulley configured as follows.

Thus, according to a first aspect of the present invention, there is provided a damper pulley characterized by: a hub; a pulley made of metal; a vulcanized rubber member forced and fixed into an annular space formed between the hub and the pulley, the vulcanized rubber member being made of a rubber-compounding material containing a higher fatty acid type processing aid in non-polar rubber as a base; and a binding layer made of a moisture-curing adhesive agent and interposed at least between the vulcanized rubber member and the pulley.

In the above damper pulley, it is preferable that the moisture-curing adhesive agent is produced by reaction of components (A), (B) and (C) under presence of an ester plasticizer, and the component (A) being liquid diene high polymer containing a hydroxyl group at its terminal, the component (B) being polyol of a molecular weight in a range of from 50 to 500 containing a hydroxyl group bonded to at least one secondary carbon atom, and the component (C) being organic polyisocyanate compound. Hereupon, it is more preferable that a ratio of content of OH-group of the component (A) to content of OH-group of the component (B) is in a range of from 1/2.5 to 1/0.5.

In the damper pulley of the first aspect, the rubber-compounding material may contain an organic vulcanizer capable of reacting the non-polar rubber at the time of vulcanization and having a polar group. In this case, the organic vulcanizer may be a quinone derivative having a halogen group introduced therein.

In the damper pulley of the first aspect, the non-polar rubber may be ethylene-propylene rubber, the processing aid may be stearic acid, and the quinone derivative may be chloranil (compound name: 2,3,5,6-tetrachloroquinone). Preferably, a lower limit of content of the stearic acid and an upper limit of content of the chloranil are 0.4 part by weight and 0.7 part by weight, respectively, to 100 part by weight of the ethylene-propylene rubber.

Further, the inventors of the present application have found that the problem can be solved when a tackifier for giving tackiness to metal, which can react with non-polar rubber at the time of vulcanization and which has a polar group, is mixed with a rubber-compounding material. As a result, the inventors have conceived an idea of a damper pulley configured as follows.

According to a second aspect of the present invention, there is provided a damper pulley comprising: a hub; a pulley being made of metal; and a vulcanized rubber member forced and fixed into an annular space formed between the hub and the pulley, wherein the vulcanized rubber member is made of a rubber-compounding material containing a higher fatty acid type processing aid in non-polar rubber as a base, and the rubber-compounding material further contains a tackifier for giving tackiness to metal, the tackifier being capable of reacting the non-polar rubber at the time of vulcanization and having a polar group.

In the above damper pulley, content of the processing. aid may be set to be not smaller than a quantity not to cause any trouble in kneading processability and may be set to be not larger than an ordinary quantity whereas content of the tackifier for giving tackiness to metal may be set to be not smaller than a quantity enough to exhibit an effect of giving tackiness to metal and may be set to be not larger than a quantity not to inhibit compressive permanent distortion of the elastic body.

According to a third aspect of the present invention, there is provided a damper pulley comprising: a hub; a pulley being made of metal; and a vulcanized rubber member forced and fixed into an annular space formed between the hub and the pulley, wherein the vulcanized rubber member is made of a vulcanizate of a rubber-compounding material containing stearic acid in ethylene-propylene rubber as a base, and the rubber-compounding material further contains a halogen-group-introduced quinone derivative as a tackifier for giving tackiness to metal.

In the above damper pulley, the quinone derivative may be chloranil (compound name being 2,3,5,6-tetrachloroquinone) and an upper limit of the content of the quinone derivative may be 0.7 part by weight to 100 part by weight of the ethylene-propylene rubber. Hereupon, a lower limit of the content of the stearic acid may be 0.4 part by weight to 100 part by weight of the ethylene-propylene rubber.

In the aforementioned all damper pulleys, the vulcanized rubber member may be molded by an extrusion molding.

Features and advantages of the invention will be evident from the following detailed description of the preferred embodiments described in conjunction with the attached drawings.

### BRIEF DESCRIPTION OF THE DRAWINGS

In the accompanying drawings:
Fig. 1 shows a sectional view showing an example of a damper pulley to which the present invention is applied;
Fig. 2 shows a graph showing the relation between the content of chloranil and compressive permanent distortion;
Fig. 3 shows a graph showing the relations among the content of stearic acid, quantity of surface precipitation and adhesion;
Fig. 4 shows a sectional view showing another example of a damper pulley to which the present invention is applied;
Fig. 5 shows a graph showing the relations among the content of stearic acid, quantity of surface precipitation and adhesion; and
Fig. 6 shows a graph showing the relation among the content of chloranil, adhesion and compressive permanent distortion.

### DETAILED DESCRIPTION OF THE PREFERRED EMBODIMENTS

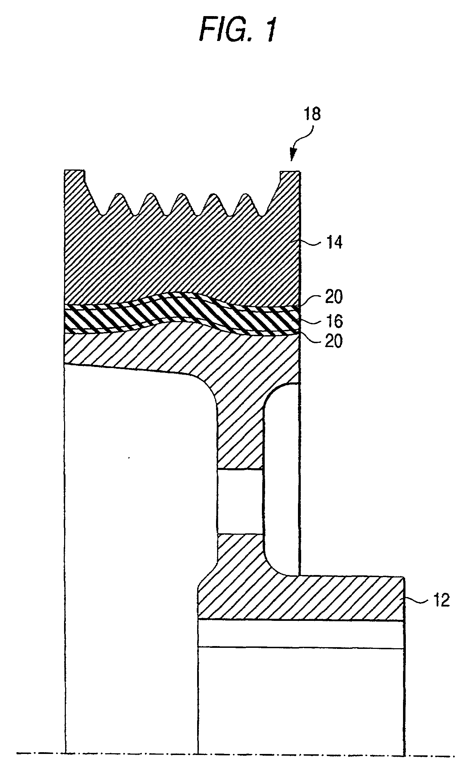

An example of a damper pulley 18 to which the present invention is applied is shown in Fig. 1. The damper pulley has a vulcanized rubber member 16 forced and fixed into an annular space formed between a hub 12 and a pulley 14 and that binding layers 20, 20 each made of a moisture-curing adhesive agent are interposed in interfaces between the hub and the vulcanized rubber and between the pulley and the vulcanized rubber.

Although both the hub 12 and the pulley 14 are generally made of metal, the hub 12 may be molded of fiber-reinforced plastics, or the like. In the case that only the pulley 14 is made of metal, it is allowed to dispose a single binding layer 20 only between the vulcanized rubber member 16 and the pulley 14.

The vulcanized rubber member 16 is made of a rubber-compounding material containing a higher fatty acid type processing aid in non-polar rubber as a base.

Although it is preferable from the point of view of heat resistance, etc. that ethylene-propylene rubber (EOR) is used as the non-polar rubber as described above in this case, styrene-butadiene rubber (SBR), isoprene rubber (IR), isobutylene-isoprene rubber (IIR), natural rubber (NR), or the like, may be used as the non-polar rubber.

Among the EOR rubber, a polymer alloy proposed previously in Unexamined Japanese Patent Publication No. Hei. 10-196719 and satisfying the following requirements (1) to (3) is particularly preferably used as the base polymer (raw material rubber).
(1) The polymer alloy is composed of: 99 to 60 % by weight of ethylene/α-olefin/unconjugated diene terpolymer rubber (A); and 20 to 40 % by weight of liquid ethylene/α-olefin copolymer rubber (B).
(2) The ethylene/α-olefin/unconjugated diene terpolymer rubber is composed of ethylene, α-olefin having 3 to 20 carbon atoms, and unconjugated diene. The molar ratio of ethylene to α-olefin is in a range of from 60/40 to 73/27. The molecular weight distribution index (M_{W}/M_{N}) is smaller than 4. The intrinsic viscosity [η_{c}] is in a range of from 2.7 to 5.0 dL/g. The iodine value is in a range of from 10 to 40. The unconjugated diene is 5-ethylidene-2-norborneene.
(3) The liquid ethylene/α-olefin copolymer rubber is composed of ethylene, and α-olefin having 3 to 20 carbon atoms. The molar ratio of ethylene to α-olefin is in a range of from 50/50 to 78/22. The intrinsic viscosity [η] is in a range of from 0.3 to 0.5 dL/g.

Examples of the higher fatty acid type processing aid are stearic acid, lauric acid, esters of these acids, etc.

The vulcanizer may be of a peroxide vulcanizer type or of a sulfur vulcanizer type. Preferably, the peroxide vulcanizer type excellent in durability against compressive permanent distortion is used as a base.

The reason why the moisture-curing adhesive agent (one-fluid type adhesive agent) is used as the material for forming the binding layers 20 is as follows. The pot life of the adhesive agent after fluid preparation is elongated compared with the two-fluid type adhesive agent. That is, the fluid stability of the adhesive agent increases so that the adhesive agent is easy to handle. The adhesive agent little exhibits its adhesive force immediately after the adhesive agent is applied onto the hub or onto the pulley. Hence, the adhesive agent does not have any bad influence on efficiency in the work of forcing vulcanized rubber into an annular space formed between the hub and the pulley.

That is, the moisture-curing adhesive agent little exhibits its initial adhesive force (for example, within 6 to 12 hours after the application thereof). Hence, when vulcanized rubber is forced into the annular space, a pseudo-active coating film (taking sliding action like a surface-active agent) of the adhesive agent is formed in an interface between the hub and the vulcanized rubber or between the pulley and the vulcanized rubber. Hence, frictional resistance between the two is reduced greatly.

A one-fluid type urethane resin described in Examined Japanese Patent Publication No. Sho. 63-15294, which resin is of-an organic-solventless type, can be preferably used as the moisture-curing adhesive agent.

Specifically, the moisture-curing adhesive agent is produced by reaction of component (A) which is liquid diene mixed polymer containing a hydroxyl group at its terminal, component (B) which is polyol having molecular weight in a range of from 50 to 500 and containing a hydroxyl group bonded to at least one secondary carbon atom, and component (C) which is organic polyisocyanate compound, under the presence of an ester plasticizer.

The component (A), which is liquid diene mixed polymer containing a hydroxyl group at its terminal, means a liquid dinene mixed polymer having number-average molecular weight in a range of from 300 to 25000 and containing 1.7 to 3.0 /mol of hydroxyl groups. Generally, a liquid dinene mixed polymer containing 50 % or more of 1,4 bonds is used. In these ranges, the adhesive layer has flexibility to secure antivibratory adhesion easily in the case where vibration acts on the damper pulley. Specific examples of the diene mixed polymer are butadiene homopolymer, isoprene homopolymer, butadiene/styrene copolymer, butadiene/isoprene copolymer, butadiene/acrylonitrile copolymer, butadiene/2-ethylhexyl acrylate copolymer, butadiene/n-octadecyl acrylate copolymer, etc.

Examples of the component (B), which is polyol having molecular weight in a range of from 50 to 500 and containing a hydroxyl group bonded to at least one secondary carbon atom, may be 1,2-propylene glycol, dipropylene glycol, 1,2-butanediol, 1,3-butanediol, 2,3-butanediol, 1,2-pentanediol, 2,3-pentanediol, 2,5-hexanediol, 2,4-hexanediol, 2-ethyl-1,3-hexanediol, cyclohexanediol, glycerin, N,N'-bis-2-hydroxypropylaniline, N,N'-bishydroxyisopropyl-2-methylpiperazine, and ethylene oxide adduct of bisphenol A. Generally, diol containing two hydroxyl groups bonded to secondary carbon atoms is used.

Examples of the organic polyisocyanate compound include tolylene diisocyanate, MDI, crude MDI, liquid denatured MDI, hexamethylene diisocyanate, xylene diisocyanate, cyclohexane phenylene diisocyanate, chlorophenylene diisocyanate, naphthalene-1,5-diisocyanate, xylylene-2,2'-diisocyanate, isopropylbenzene-2,4-diisocyanate, polymethylene polyphenylisocyanate, triphenylmethane-4,4',4''-triisocyanate, isophorone diisocyanate, tolylene diisocyanate adduct of polypropylnene glycol or triol, reaction product of 1 mol of trimethylol propane and 3 mol of tolylene diisocyanate, etc. Among these, the MDI type high in reactivity is preferably used.

Examples of the ester plasticizer to be used in the present invention include phthalic esters such as dibutyl phthalate, di-2-ethylhexyl phthalate (hereinafter abbreviated as "DOP"), di-n-octyl phthalate, etc., straight-chain dibasic esters such as dioctyl adipate, dioctyl azelate, dioctyl sebacate, etc., and phosphoric esters such as tri-2-ethylhexyl phosphate, trixylenyl phosphate, etc.

In the above description, the polyol.component is preferably made of an isocynate prepolymer which is prepared by reaction of the component (A) which is liquid butadiene mixed polymer having number-average molecular weight in a range of from 500 to 10000 and containing a hydroxyl group at its terminal as a main component, the component (B) which is polyol component containing aniline type polyol (for example, N,N'-bis-hydrooxylpropylaniline) with molecular weight in a range of from 50 to 500 and containing hydroxyl groups bonded to at least two secondary carbon atoms and the component (C) which is organic polyisocyanate, under the presence of a phthalate plasticizer.

Here, the liquid butadine mixed polymer is used as a main component in order to give flexibility easily to the adhesive layer formed. The aniline type polyol is used in order to improve the cohesive disruptive strength of the adhesive layer.

Incidentally, the mixture ratio (weight proportion) of the liquid diene mixed polymer to the aniline type polyol is generally set to be in a range of from 80/20 to 95/5.

That is, the mixture ratio of the component (A) to the component (B) is set so that the ratio of the content of the OH-group of the component (A) to the content of the OH-group of the component (B) is set to be preferably in a range of from 1/2.5 to 1/0.5, more preferably in a range of from 1/2 to 1/1.

If the content of the component (B) is too small, it is difficult to secure adhesive strength sufficiently. If the content of the component (B) is too large, viscosity increases so that efficiency in the applying work and/or in the forcing-in work is lowered.

The content of NCO pigment is set to be in a range of from 3 to 10 % by weight. The content of the ester plasticizer mixed in the moisture-curing adhesive agent is set to be in a range of from 5 to 70 % by weight, preferably in a range of from 20 to 50 % by weight. If the content of the ester plasticizer is too large, there is a risk that the plasticizer moves into the vulcanized rubber after application thereof and has a bad influence on the physical properties of the vulcanized has a bad influence on the physical properties of the vulcanized rubber.

Incidentally, process oil such as paraffinic oil may be suitably mixed in the moisture-curing adhesive agent. Use of such paraffinic oil can increase the stability (pot life) of the adhesive agent. Moreover, use of such paraffinic oil can adjust the viscosity of the adhesive agent to a suitable value to obtain optimum forcing load and good applying workability. . If the viscosity is set to be too low, there is a risk that the forcing work ability of the vulcanized rubber member is lowered because of lowering of the ability of forming an active coating film.

The reason why the pot life is elongated is assumed as follows. The adhesive agent is diluted with paraffinic oil. As a result, reactivity of the adhesive agent at the time of preservation (when the adhesive agent is left at ordinary temperature) is lowered.

Further, in the present invention, an organic vulcanizer being of capable of reacting with non-polar rubber (polymer) at the time of vulcanization and having a polar group is added to the rubber-compounding material. Hence, it is easy to secure early affinity after a short-term heat run test. The reason is that the moisture-curing adhesive agent is cured early because of acceleration of reaction.

Here, examples of the organic vulcanizer are quinone derivatives having polar groups (especially, halogen groups: Cl, Br, etc.) introduced therein, and triazine derivatives having polar groups (especially, mercapto group, amino group, etc.) introduced therein similarly. Each of these organic vulcanizers having polar groups is crosslinked both to the non-polar rubber and to the moisture-curing adhesive agent. Hence, each of these organic vulcanizers has a vulcanizer function of curing (crosslinking) the adhesive agent earlier compared with the case where the adhesive agent merely adheres to the non-polar rubber. Chloranil (compound name: 2,3,5,6-tetrachloroquinone) can be preferably used as one of the quinone derivatives. 2,4,6-trimercapto-1,3,5-triazine. can be preferably used as one of the triazine derivatives.

Besides the above description, amino group (NH₂), hydroxyl group (OH), carboxyl group (CO₂H), methyl halide group (CH₂X), etc. may be used as the polar group.

The content of the organic vulcanizer is set to be not smaller than a quantity enough to exhibit the effect of accelerating the reaction of the moisture-curing adhesive agent and is set to be not larger than a quantity not to inhibit compressive permanent distortion of the elastic body. For example, in the case of chloranil, the content of the organic vulcanizer is set to be in a range of from 0.1 to 0.7 part, preferably in a range of from 0.4 to 0.6 part, more preferably in a range of from 0.45 to 0.55 part to 100 part of the ethylene-propylene rubber (hereinafter referred to as "EOR").

Although the content of the processing aid may be an ordinary quantity, it is preferable from the point of view of tackiness (affinity) that the content of the processing aid is set to be not smaller than a quantity not to cause any trouble in processability (kneading processability of rubber) and is set to be not larger than the ordinary quantity. Specifically, in the case of stearic acid, the content of the processing aid is set to be in a range of from 0.4 to 1 part, preferably in a range of from 0.45 to 0.8 part, more preferably in a range of from 0.5 to 0.6 part to 100 part of EOR.

Besides the non-polar rubber, the higher fatty acid type processing aid and the organic vulcanizer, carbon-black ordinarily used for rubber compounding, softener (except the fatty acid type processing aid), zinc oxide, and other subsidiary materials are mixed with the rubber-compounding material (unvulcanized compounded rubber) for forming the vulcanized rubber member according to the present invention.

For example, in the case of EOR of an organic peroxide vulcanizer type, the rubber-compounding material is prepared by the following method.

That is, the aforementioned EOR, softener (process oil) and stearic acid are kneaded at a temperature in a range of from 30 to 170°C for a time in a range of from 3 to 10 minutes by a mixer such as a Banbury mixer, or the like. Then, the vulcanizer (organic peroxide or sulfur), carbon black and the aforementioned organic vulcanizer (chloranil) are kneaded at a roll temperature in a range of from 40 to 80°C for a time in a range of from 5 to 30 minutes by a roll such as an oven roll, or the like, while vulcanization accelerator or vulcanization assistant, and other subsidiary materials are mixed additionally if necessary. Then, the kneaded mixture is extruded to prepare ribbon-like or sheet-like compounded rubber.

In order to obtain the vulcanized rubber member from the EOR rubber-compounding material according to the present invention, the aforementioned unvulcanized compounded rubber may be vulcanized after molded into an intended shape of the rubber member or the aforementioned unvulcanized compounded rubber may be cut into an intended shape of the rubber member after vulcanized.

The aforementioned unvulcanized compounded rubber is molded into an intended shape by an extrusion molding machine, a calender roll or a press. At the same time the unvulcanized compounded rubber is molded, or after the molded product is introduced into a vulcanization tank, the molded product is heated at a temperature in a range of from 130 to 270°C for a time in a range of from 1 to 30 minutes to thereby form vulcanized rubber. For such vulcanization, a mold may be used or need not be used.

The aforementioned vulcanized rubber member is prepared as a band-plate-like vulcanized rubber member with a predetermined length, a predetermined width and a predetermined thickness (by molding or cutting).

With respect to the vulcanized rubber member 16, ordinarily, after an injection fluid is applied on the vulcanized rubber band plate (vulcanized rubber member), the band plate is forced into an annular space formed between the hub 12 and the pulley 14 which are fixed (see Fig. 1). On this occasion, compressibility is generally in a range of from 24 to 45 %, preferably in a range of from 33 to 42 %. On this occasion, the moisture-curing adhesive agent is applied onto the hub 12/pulley 14 and/or onto the vulcanized rubber member 16 in advance. General means such as spray coating, brush coating, roller coating, etc. may be used as the coating method.

Incidentally, the hub and the pulley are subjected to pre-treatment (degreasing and cleaning process) in advance. In the case where the hub and the pulley are made of metal, the surfaces thereof to be in contact with the vulcanized rubber member are roughened by a grit-blasting process if necessary.

The moisture-curing adhesive agent does not exhibit its adhesive force for a predetermined time (for example, 12 hours) after applied. Hence, the coating film (serving as a binding layer) of the adhesive agent fulfills a function of reducing insertion load by its wetness. Hence, efficiency in the forcing work ability of the vulcanized rubber member is improved.

With the passage of the predetermined time (generally, 24 hours), the adhesive agent is cured by moisture in air to thereby exhibit its adhesive force. Hence, a binding layer is formed between the hub and the vulcanized rubber or between the pulley and the vulcanized rubber. Hence, adhesion between the rubber and metal members can be obtained sufficiently by the presence of the binding layer.

Particularly when the rubber-compounding material contains an organic vulcanizer (chloranil), affinity between the rubber and metal members is improved greatly after a resonance durability test.

### Test Example I

Test examples performed on the embodiment to confirm the effect of the present invention will be described below in connection with a comparative example.
A. The composition of the adhesive agent used and the method of preparing the unvulcanized rubber compounded material are as follows.

### (1) Adhesive Agent Used:

A recipe for the moisture-curing adhesive agent used in each test example is as follows.

| | |
|---|---|
| Butadiene polyol (A) | 100 part |
| Aniline polyol (B) | 8.2 part |
| DOP | 92 part |
| MDI | 60 part |
| NCO content | 5 wt% |
| DOP content | 35 wt% |
| OH ratio (A)/(B) | 1/1 |
| Viscosity (measured by a B type viscometer) | 7 Pa · s |

### (2) Preparation of Unvulcanized Rubber-Compounding Material

A recipe used in each test example is as follows.

| | |
|---|---|
| EOR (polymer alloy) | 147 part |
| Stearic acid | Variable |
| Zinc oxide | 5 part |
| Carbon black | 80 part |
| Age resistor | 2 part |
| DCP (40 % content article) | 8 part |
| Process oil | 13 part |
| Chloranil | Variable |

Incidentally, the polymer alloy used contains 100 part of a high molecular weight component shown in the following specification, and 47 part of a low molecular weight component shown in the following specification.

### <Specification of High Molecular Weight Component>

Ethylene/α-olefin: 68/32, molecular weight distribution index (M_{W}/M_{N}): 3.7, intrinsic viscosity [η_{c}]: 4.0 dL/g, iodine value: 22

### <Specification of Low Molecular Weight Component>

Ethylene/α-olefin: 68/32, intrinsic viscosity [η_{c}]: 0.37 dL/g, iodine value: 0

In the aforementioned basic recipe, a rubber-compounding material containing chloranil and stearic acid in the mixture proportion shown in Table 1 was kneaded by a Banbury mixer to prepare an unvulcanized rubber-compounding material.
B. The unvulcanized rubber-compounding material was used for respective tests according to the following method.

### (1) Product Check Test

A band-plate-like vulcanized rubber member (width: 19 mm, length: 325 mm, thickness: 5.4 mmt) was prepared by compression molding (vulcanizing condition: 170°C×10 min). Then, the adhesive agent shown in the above paragraph (1) was applied by bush onto a damper pulley (hub outer diameter: 100 mmφ, pulley inner diameter: 107 mmφ, width: 30 mm) which had been washed in advance. After a forcing assistant fluid was applied, the vulcanized rubber member was forced and fixed (compressibility: 35 %) into the damper pulley. Thus, respective damper pulleys according to the embodiment of the present invention were prepared. Incidentally, a comparative example was prepared in the same condition as in the embodiment except that the adhesive agent was not used in the comparative example.

Then, torque (adhesion) in the beginning of slide before and after a heat run test (heating: 120°C×240 h, 120°C×1000 h) and torque in the beginning of slide after a resonance point durability test were measured with respect to each of the damper pulleys. Incidentally, the condition for the resonance point durability test was that the rubber member was vibrated by 10,000,000 times at 120°C with relative amplitude of ±0.75 deg at a resonance point (phase difference-90°) after heated at 120°C for 240 hours.

From Table 1 showing results, it is proved that adhesion before and after the heat run test in the test examples using the adhesive agent according to the embodiment of the present invention is increased compared with the comparative Example. It is further proved that the chlorianil-mixing recipe of the-test example 2 is good in adhesion and particularly extremely excellent in affinity after the short-term heat run test (inclusive of after the resonance point durability test) compared with the chloranil-excluding recipe of the test example 1.

**Table 1**

| | | Forcing in Comparative Example | Adhesive Forcing in Example 1 | Adhesive Forcing in Example 2 |
|---|---|---|---|---|
| Mixture | Stearic acid | 0.5 part | 1 part | 0.5 part |
| | Chloranil | 0.5 part | 0 part | 0.5 part |
| Torque in starting slide | Before heat deterioration | 420 N m | 740 N m | 980 N m |
| | After 120°C× 240 h | 585 N m | 870 N m | 1530 N m |
| | After 120°C× 1000 h | 640 N m | 1600 N m | 1610 N m |
| | After resonance point durability test | - | 980 N m | 1730 N m |

### (2) Compressive Permanent Distortion

Compressive permanent distortion of each vulcanized rubber test piece after the heat run test (120°C×70 h) was measured in accordance with JIS K 6301.

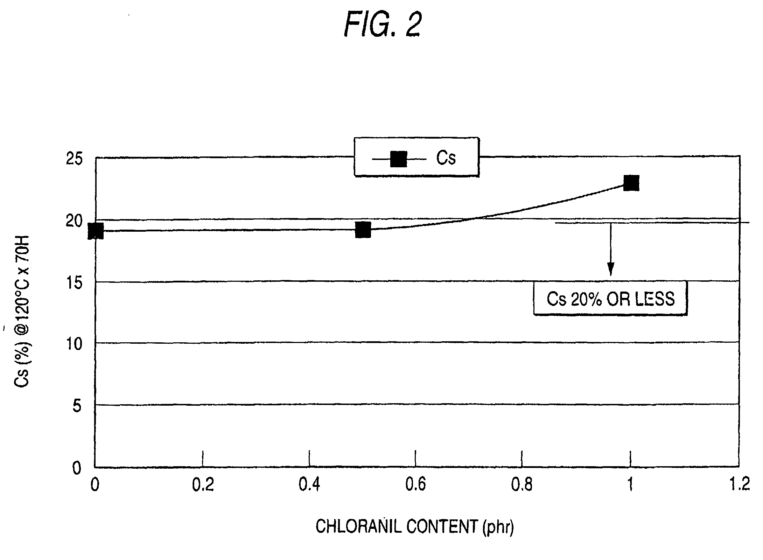

From Fig. 2 showing results, it is proved that compressive permanent distortion is also worsened after the content of the chloranil reaches about 0.7 part.

### (3) Adhesion/Quantity of Surface Precipitation

A columnar body (16 mmφ×10 mmH) was prepared by press vulcanization molding (170°C×10 min). After the columnar body was heated (120°C×240 h) in the condition that the columnar body was clamped by iron plates of 25 mm□×3.2 mmt so as to be compressed by 35 %, strength in the case where the iron plates were departed from the vulcanized rubber body in the condition that the iron plates were fixed and pulled respectively was measured as adhesion. At the same time, the quantity of surface precipitation on the circumferential surface was measured by a Fourier transform infrared spectrometry (FT-IR).

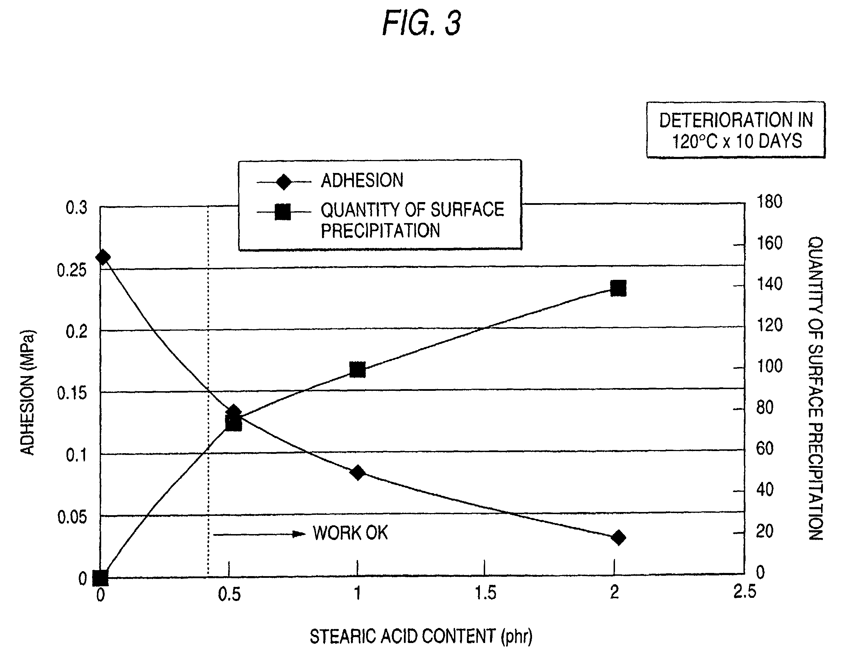

From Fig. 3 showing results, it is proved that the quantity of surface precipitation increases and adhesion decreases as the content of the stearic acid increases. That is, it is preferable from the point of view of adhesion that the content of the stearic acid is set to be small, that is, smaller than 1 part.

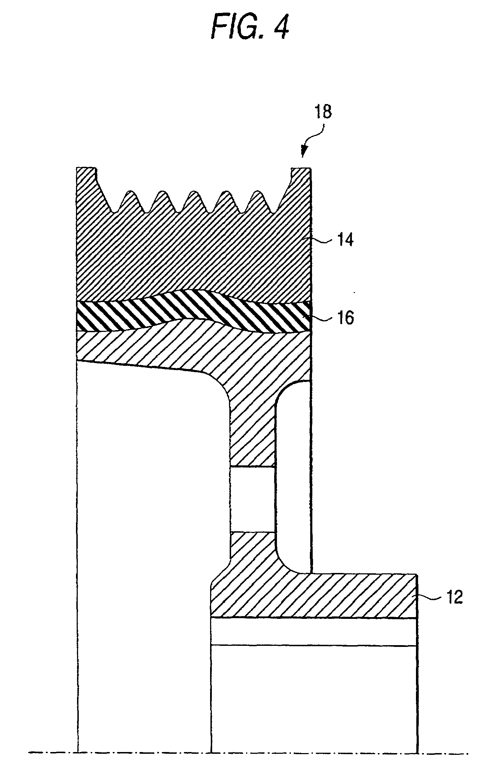

Another example of a damper pulley 18 to which the present invention is applied is shown in Fig. 4. The damper pulley of this example is not provided with binding layers 20, 20, and its rubber-compounding material contains a tackifier for giving tackiness to metal, the tackifier being capable of reacting with non-polar rubber (polymer) at the time of vulcanization and having a polar group. It is also similar to the preceding example that the vulcanized rubber member 16 is made of a rubber-compounding material containing a higher fatty acid type processing aid in non-polar rubber as a base.

Here, examples of the tackifier for giving tackiness to metal may include quinone derivatives having polar groups (especially, halogen groups such as Cl, Br, etc.) introduced therein, and triazine derivatives having polar groups (especially, mercapto group, amino group) introduced therein similarly. Chloranil (compound name being 2,3,5,6-tetrachloroquinone) can be preferably used as one of the quinone derivatives. It is preferable to use 2,4,6-trimercapto-1,3,5-triazine as one of the triazine derivatives.

Besides the above description, amino group (NH₂), hydroxyl group (OH), carboxyl group (CO₂H), methyl halide group (CH₂X), etc. may be used as the polar group.

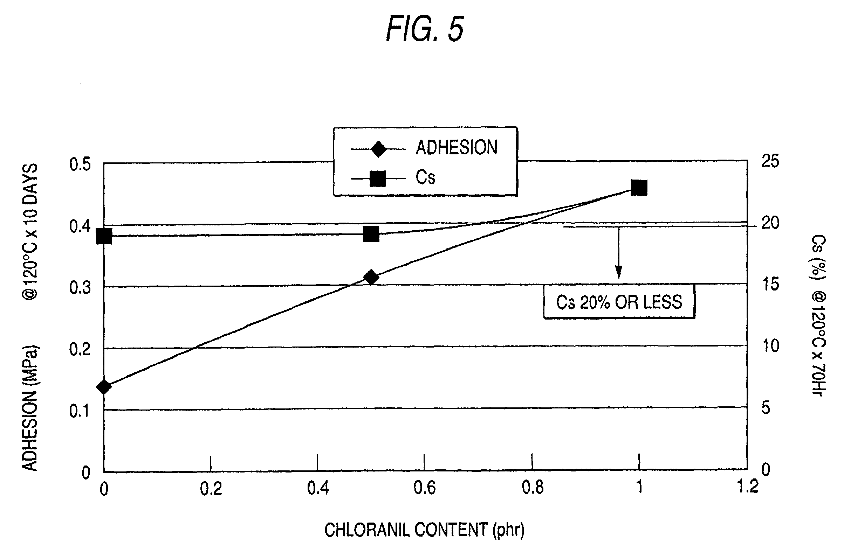

The content of the tackifier for giving tackiness to metal is set to be not smaller than a quantity enough to exhibit the effect of giving tackiness to metal and is set to be not larger than a quantity not to inhibit compressive permanent distortion of the elastic body. For example, in the case of chloranil, the content of the tackifier is set to be in a range of from 0.1 to 0.7 part, preferably in a range of from 0.4 to 0.6 part, more preferably in a range of from 0.45 to 0.55 part to 100 part of the ethylene-propylene rubber (hereinafter referred to as "EOR") (see Fig. 5).

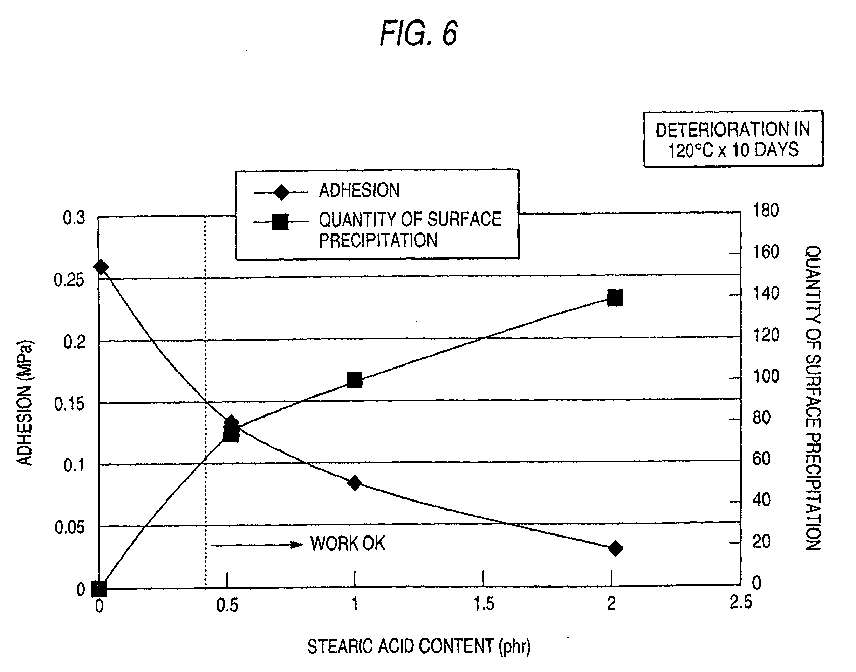

Although the content of the processing aid may be same as the preceding example. Thus, in the case of stearic acid, the content of the processing aid is set to be in a range of from 0.4 to 1 part, preferably in a range of from 0.45 to 0.8 part, more preferably in a range of from 0.5 to 0.6 part to 100 part of EOR (see Fig. 6).

In the present example, the tackifier for giving tackiness to metal is further added to the rubber-compound material of the preceding example (chloranil). The rubber-compound material is molded, vulcanized, and cut by the same manner for the preceding example, and a vulcanized rubber member is obtained.

### Test Example II

A test example performed to confirm the effect of the present invention will be described below.
A. A basic recipe used in each test example is as follows.

| Recipe for EOR Mixture | |
|---|---|
| EOR (polymer alloy) | 147 part |
| Stearic acid | variable |
| Zinc oxide | 5 part |
| Carbon black | 80 part |
| Age resistor | 2 part |
| DCP (40 % content article) | 8 part |
| Process oil | 13 part |
| Chloranil | variable |

Incidentally, the polymer alloy used contains 100 part of a high molecular weight component (A component) shown in the following specification, and 47 part of a low molecular weight component (B component) shown in the following specification.

### <Specification of A Component>

Ethylene/α-olefin: 68/32, molecular weight distribution index (M_{w}/Mₙ): 3.7, intrinsic viscosity [η_{c}]: 4.0 dL/g, iodine value: 22

### <Specification of B Component>

Ethylene/α-olefin: 68/32, intrinsic viscosity [η_{c}]: 0.37 dL/g, iodine value: 0

In the aforementioned basic recipe, a rubber-compounding material containing chloranil and stearic acid in the mixture proportion shown in each of Table 2, Fig.5 (stearic acid: 1 part mixed) and Fig. 6 (chloranil: 0 part) was kneaded by a Banbury mixer to prepare an unvulcanized rubber-compounding material.

The unvulcanized rubber-compounding material was used for a test according to the following method.

### (1) Product Check Test

A band-plate-like vulcanized rubber member (width: 19 mm, length: 325 mm, thickness: 5.4 mmt) was prepared by compression molding (vulcanizing condition: 170°C×10 min). After an injection fluid was applied, the vulcanized rubber member was simply forced and fixed (compressibility: 35 %) into a damper pulley (hub outer diameter: 100 mmφ, pulley inner diameter: 107 mmφ, width: 30 mm) having a sectional shape shown in Fig. 4. Thus, a damper pulley according to the embodiment of the present invention and a damper pulley according to.a comparative example were prepared.

Then, torque (adhesion) in the beginning of slide (starting slide) before a heat run test and that after the heat run test (heating: 120°C×240 h) were measured with respect to each of the damper pulleys.

From Table 2 showing results, it is proved that adhesion before and after the heat run test in the recipe for mixing chloranil according to the embodiment of the present invention is good and the rate of reduction of adhesion in the chloranil-mixing recipe is low compared with the background-art recipe for mixing no chloranil.

### (2) Compressive Permanent Distortion

Compressive permanent distortion after the heat run test (120°C×70 h) was measured in accordance with JIS K 6301.

From Fig. 5 showing results, it is proved that adhesion increases as the the content of the chloranil increases, and that compressive permanent distortion is also worsened after the content of the chloranil reaches about 0.7 part.

### (3) Adhesion/Quantity of Surface Precipitation

A columnar body (16 mmφ×10 mmH) was prepared by press vulcanization molding (170°C×10 min). After the columnar body was heated (120°C×10 days) in the condition that the columnar body was clamped by iron plates of 25 mm□×3.2 mmt so as to be compressed by 35 %, compressive permanent distortion . was measured. On this occasion, strength in the case where the iron plates were departed from the vulcanized rubber body in the condition that the iron plates were fixed and pulled respectively was defined as adhesion.

Incidentally, the quantity of surface precipitation was measured by a Fourier transform infrared spectrometry (FT-IR).

From Fig. 6 showing results, it is proved from the quantity of surface precipitation increases and adhesion decreases as the content of the stearic acid increases. That is, it is preferable from the point of view of adhesion that the content of the stearic acid is set to be small, that is, smaller than 1 part.

**Table 2**

| | | Comparative Example | Embodiment |
|---|---|---|---|
| Mixture | Stearic acid | 1 part | 0.5 part |
| | Chloranil | 0 part | 0.5 part |
| Torque in Starting Slide | Before heat deterioration | 740 N·m | 880 N·m |
| | After heat deterioration (rate of reduction) | 400 N·m | 680 N·m |
| | | (-46 %) | (-23 %) |

The damper pulley according to the present invention is configured so that a binding layer made of a moisture-curing adhesive agent is interposed between metal and vulcanized rubber members. Hence, there is little problem in affinity (adhesion) between the hub and the vulcanized rubber member and between the pulley and the vulcanized rubber member in the damper pulley of the forcing and fixing type even under a high-temperature atmosphere. The cohesive force of the binding layer rather increases with the advance of reaction of the moisture-curing adhesive agent, so that the binding force after the heat run test increases.

And an organic vulcanizer capable of reacting with the non-polar rubber at the time of vulcanization and having a polar group is mixed with the rubber-compounding material containing a higher fatty acid type processing aid and provided for forming the vulcanized rubber member. Hence, the binding force in the short-term heat run test (240 h) can be secured. This is assumed because the time required for the binding force's arrival at the maximum value due to completion of reaction of the moisture-curing adhesive agent to exhibit its adhesive force can be shortened by the organic vulcanizer.

Further, the damper pulley according to the present invention, a rubber-compounding material, which contains a higher fatty acid type processing aid and from which a -vulcanized rubber member is formed, further contains a tackifier for giving tackiness to metal. The tackifier can react with the non-polar rubber at the time of vulcanization and has a polar group. Hence, as will be shown in the following test example, there is little problem in affinity (adhesion) between the hub and the vulcanized rubber member and/or between the pulley and the vulcanized rubber member in the damper pulley of a simply forcing and fixing type even-under a high-temperature atmosphere.

Further, when the content of the higher fatty acid type processing aid in this case is set to be not smaller than a quantity not to cause any trouble in kneading processability and is set to be not larger than an ordinary quantity, there is less problem in affinity (adhesion) between the hub and the vulcanized rubber member and/or between the pulley and the vulcanized rubber member.

## Claims

1. A damper pulley **characterized by**:
a hub;
a pulley made of metal;
a vulcanized rubber member forced and fixed into an annular space formed between said hub and said pulley, said vulcanized rubber member being made of a rubber-compounding material containing a higher fatty acid type processing aid in non-polar rubber as a base; and
a binding layer made of a moisture-curing adhesive agent and interposed at least between said vulcanized rubber member and said pulley.

2. A damper pulley according to claim 1, wherein said moisture-curing adhesive agent is produced by reaction of components (A), (B) and (C) under presence of an ester plasticizer, and said component (A) being liquid diene high polymer containing a hydroxyl group at its terminal, said component (B) being polyol of a molecular weight in a range of from 50 to 500 containing a hydroxyl group bonded to at least one secondary carbon atom, and said component (C) being organic polyisocyanate compound.

3. A damper pulley according to claim 2, wherein a ratio of content of OH-group of said component (A) to content of OH-group of said component (B) is in a range of from 1/2.5 to 1/0.5.

4. A damper pulley according to any one of claims 1 to 3, wherein said rubber-compounding material contains an organic vulcanizer capable of reacting said non-polar rubber at the time of vulcanization and having a polar group.

5. A damper pulley according to claim 4, wherein said organic vulcanizer is a quinone derivative having a halogen group introduced therein.

6. A damper pulley according to any one of claims 1 to 5, wherein said non-polar rubber is ethylene-propylene rubber, said processing aid is stearic acid, and said quinone derivative is chloranil (compound name: 2,3,5,6-tetrachloroquinone).

7. A damper pulley according to claim 6, wherein a lower limit of content of said stearic acid and an upper limit of content of said chloranil are 0.4 part by weight and 0.7 part by weight, respectively, to 100 part by weight of said ethylene-propylene rubber.

8. A damper pulley **characterized by**:
a hub;
a pulley being made of metal; and
a vulcanized rubber member forced and fixed into an annular space formed between said hub and said pulley,
wherein said vulcanized rubber member is made of a rubber-compounding material containing a higher fatty acid type processing aid in non-polar rubber as a base, and said rubber-compounding material further contains a tackifier for giving tackiness to metal, said tackifier being capable of reacting said non-polar rubber at the time of vulcanization and having a polar group.

9. A damper pulley according to claim 8, wherein content of said processing aid is set to be not smaller than a quantity not to cause any trouble in kneading processability and is set to be not larger than an ordinary quantity and is in the range of 0.4 to 1 part per 100 parts of rubber, whereas content of said tackifier for giving tackiness to metal is set to be not smaller than a quantity enough to exhibit an effect of giving tackiness to metal and is set to be not larger than a quantity not to inhibit compressive permanent distortion of said elastic body and is in the range of 0.1 to 0.7 parts per 100 parts of rubber.

10. A damper pulley **characterized by**:
a hub;
a pulley being made of metal; and
a vulcanized rubber member forced and fixed into an annular space formed between said hub and said pulley,
wherein said vulcanized rubber member is made of a vulcanizate of a rubber-compounding material containing stearic acid in ethylene-propylene rubber as a base, and said rubber-compounding material further contains a halogen-group-introduced quinone derivative as a tackifier for giving tackiness to metal.

11. A damper pulley according to claim 10, wherein said quinone derivative is chloranil (compound name being 2,3,5,6-tetrachloroquinone) and an upper limit of the content of said quinone derivative is 0.7 part by weight to 100 part by weight of said ethylene-propylene rubber.

12. A damper pulley according to claim 11, wherein a lower limit of the content of said stearic acid is 0.4 part by weight to 100 part by weight of said ethylene-propylene rubber.

13. A damper pulley according to all aforementioned claims, wherein said vulcanized rubber member is molded by an extrusion molding.

## Patentansprüche

1. Eine Riemenscheibe mit Dämpfungselement, **gekennzeichnet durch**:
eine Nabe;
eine aus Metall hergestellte Riemenscheibe;
ein vulkanisiertes Kautschukelement, das in einen ringförmigen Raum gedrückt und darin fixiert ist, der zwischen der Nabe und der Riemenscheibe ausgebildet ist, wobei das vulkanisierte Kautschukelement aus einem Kauschuk-Compoundiermaterial hergestellt ist, das eine höhere Fettsäure als Verarbeitungshilfsstoff in einem unpolaren Kautschuk als Basis enthält; und
eine Bindungsschicht, die aus einem feuchtigkeitshärtenden Klebemittel hergestellt und mindestens zwischen dem vulkanisierten Kautschukelement und der Riemenscheibe angeordnet ist.

2. Riemenscheibe mit Dämpfungselement nach Anspruch 1, bei der das feuchtigkeitshärtende Klebemittel durch die Umsetzung der Komponenten (A), (B) und (C) in Gegenwart eines Ester-Weichmachers hergestellt wird, die Komponente (A) ein flüssiges Dien-Hochpolymer ist, das eine endständige Hydroxylgruppe enthält, die Komponente (B) ein Polyol mit einem Molekulargewicht im Bereich von 50 bis 500 ist, das eine Hydroxylgruppe enthält, die an mindestens ein sekundäres Kohlenstoffatom gebunden ist, und die Komponente (C) eine organische Polyisocyanatverbindung ist.

3. Riemenscheibe mit Dämpfungselement nach Anspruch 2, bei der das Verhältnis des Gehalts an OH-Gruppen der Komponente (A) zu dem Gehalt an OH-Gruppen der Komponente (B) im Bereich von 1/2,5 bis 1/0,5 liegt.

4. Riemenscheibe mit Dämpfungselement nach einem der Ansprüche 1 bis 3, bei der das Kauschuk-Compoundiermaterial ein organisches Vulkanisiermittel enthält, das mit dem unpolaren Kautschuk bei der Vulkanisation reagieren kann und das eine polare Gruppe aufweist.

5. Riemenscheibe mit Dämpfungselement nach Anspruch 4, bei der das organische Vulkanisiermittel ein Chinonderivat ist, das eine Halogengruppe aufweist.

6. Riemenscheibe mit Dämpfungselement nach einem der Ansprüche 1 bis 5, bei welcher der unpolare Kautschuk ein Ethylen-Propylen-Kautschuk, der Verarbeitungshilfsstoff Stearinsäure und das Chinonderivat Chloranil (Verbindungsname: 2,3,5,6-Tetrachlorchinon) ist.

7. Riemenscheibe mit Dämpfungselement nach Anspruch 6, bei der die Untergrenze des Gehalts an Stearinsäure und die Obergrenze des Gehalts an Chloranil 0,4 Gewichtsteile bzw. 0,7 Gewichtsteile bezogen auf 100 Gewichtsteile des Ethylen-Propylen-Kautschuks ist.

8. Eine Riemenscheibe mit Dämpfungselement, **gekennzeichnet durch**:
eine Nabe;
eine aus Metall hergestellte Riemenscheibe; und
ein vulkanisiertes Kautschukelement, das in einen ringförmigen Raum gedrückt und darin fixiert ist, der zwischen der Nabe und der Riemenscheibe ausgebildet ist,
wobei das vulkanisierte Kautschukelement aus einem Kauschuk-Compoundiermaterial hergestellt ist, das eine höhere Fettsäure als Verarbeitungshilfsstoff in einem unpolaren Kautschuk als Basis enthält; und das Kauschuk-Compoundiermaterial ferner einen Klebrigmacher zum Klebrigmachen von Metall enthält, wobei der Klebrigmacher mit dem unpolaren Kautschuk bei der Vulkanisation reagieren kann und eine polare Gruppe aufweist.

9. Riemenscheibe mit Dämpfungselement nach Anspruch 8, bei welcher der Gehalt an Verarbeitungshilfsstoff so eingestellt ist, dass er nicht kleiner ist als eine Menge, die bei der Knetverarbeitungsfähigkeit nicht zu Schwierigkeiten führt und dass er nicht größer ist als eine gewöhnliche Menge und im Bereich von 0,4 Teilen bis 1 Teil pro 100 Teile des Kautschuks liegt, wohingegen der Gehalt an Klebrigmacher zum Klebrigmachen von Metall so eingestellt ist, dass er nicht kleiner ist als eine Menge, die ausreichend ist, um das Metall klebrig zu machen und dass er nicht größer ist als eine Menge, welche die permanente Verformung des elastischen Körpers durch Druck nicht inhibiert und dass er im Bereich von 0,1 bis 0,7 Teilen pro 100 Teilen Kautschuk liegt.

10. Eine Riemenscheibe mit Dämpfungselement, **gekennzeichnet durch**:
eine Nabe;
eine aus Metall hergestellte Riemenscheibe; und
ein vulkanisiertes Kautschukelement, das in einen ringförmigen Raum gedrückt und darin fixiert ist, der zwischen der Nabe und der Riemenscheibe ausgebildet ist,
wobei das vulkanisierte Kautschukelement aus einem Vulkanisat eines Kauschuk-Compoundiermaterials hergestellt ist, das Stearinsäure in Ethylen-Propylen-Kautschuk als Basis enthält; und das Kauschuk-Compoundiermaterial ferner ein Chinonderivat, das eine Halogengruppe enthält, als Klebrigmacher zum Klebrigmachen von Metall enthält.

11. Riemenscheibe mit Dämpfungselement nach Anspruch 10, bei der das Chinonderivat Chloranil (Verbindungsname: 2,3,5,6-Tetrachlorchinon) ist und die Obergrenze des Gehalts an Chinonderivat 0,7 Gewichtsteile pro 100 Gewichtsteile des Ethylen-Propylen-Kautschuks beträgt.

12. Riemenscheibe mit Dämpfungselement nach Anspruch 11, bei der die Untergrenze des Gehalts an Stearinsäure 0,4 Gewichtsteile pro 100 Gewichtsteile des Ethylen-Propylen-Kautschuks beträgt.

13. Riemenscheibe mit Dämpfungselement nach einem der vorstehenden Ansprüche, bei der das vulkanisierte Kautschukelement durch Spritzguss geformt ist.

## Revendications

1. Poulie avec élément d'amortissement, **caractérisée par** :
un moyeu ;
une poulie réalisée en métal ;
un élément en caoutchouc vulcanisé introduit à force et fixé dans un espace annulaire formé entre ledit moyeu et ladite poulie, ledit élément en caoutchouc vulcanisé étant constitué d'un matériau en mélange de caoutchouc contenant un adjuvant de traitement du type acide gras de degré supérieur dans un caoutchouc non polaire à titre de base ; et
une couche de liant réalisée d'un agent adhésif à prise en présence d'humidité et interposée au moins entre ledit élément en caoutchouc vulcanisé et ladite poulie.

2. Poulie avec élément d'amortissement selon la revendication 1, dans laquelle ledit agent adhésif à prise en présence d'humidité est produit par réaction de composants (A), (B) et (C) en présence d'un plastifiant à base d'ester, dans lesquels
ledit composant (A) est un polymère liquide à forte proportion de diène contenant un groupe hydroxyle à l'extrémité,
ledit composant (B) est du polyol d'un poids moléculaire dans une plage de 50 à 500, contenant un groupe hydroxyle lié à au moins un atome de carbone secondaire, et
ledit composant (C) est un mélange polyisocyanate organique.

3. Poulie avec élément d'amortissement selon la revendication 2, dans lequel le rapport entre la teneur en groupe OH⁻ dudit composant (A) et la teneur en groupe OH⁻ dudit composant (B) est dans une plage de 1/2,5 à 1/0,5.

4. Poulie avec élément d'amortissement selon l'une quelconque des revendications 1 à 3, dans laquelle ledit matériau en mélange de caoutchouc contient un agent de vulcanisation organique capable de faire réagir ledit caoutchouc non polaire au moment de la vulcanisation et comportant un groupe polaire.

5. Poulie avec élément d'amortissement selon la revendication 4, dans laquelle ledit agent de vulcanisation organique est un dérivé de quinone dans lequel est introduit un groupe halogène.

6. Poulie avec élément d'amortissement selon l'une quelconque des revendications 1 à 5, dans laquelle ledit caoutchouc non polaire est un caoutchouc éthylène-propylène, ledit adjuvant de traitement est de l'acide stéarique, et ledit dérivé de quinone est du chloranil (nom du composé : 2,3,5,6-tétrachloroquinone).

7. Poulie avec élément d'amortissement selon la revendication 6, dans laquelle la limite inférieure de la teneur dudit acide stéarique et la limite supérieure de la teneur dudit chloranil sont respectivement de 0,4 parties en poids et 0,7 parties en poids, pour 100 parties en poids dudit caoutchouc éthylène-propylène.

8. Poulie avec élément d'amortissement, **caractérisée par** :
un moyeu ;
une poulie réalisée en métal ; et
un élément en caoutchouc vulcanisé introduit à force et fixé dans un espace annulaire formé entre ledit moyeu et ladite poulie,
dans laquelle ledit élément caoutchouc vulcanisé est réalisé en un matériau en mélange de caoutchouc contenant un adjuvant de traitement du type acide gras de degré supérieur dans un caoutchouc non polaire à titre de base, et ledit matériau en mélange de caoutchouc contient en outre un agent collant pour conférer un pouvoir collant au métal, ledit agent collant étant capable de réagir avec ledit caoutchouc non polaire au moment de la vulcanisation et ayant un groupe polaire.

9. Poulie avec élément d'amortissement selon la revendication 8, dans laquelle la teneur dudit adjuvant de traitement est choisie de manière à ne pas être inférieure à une quantité pour ne pas provoquer de problèmes en termes de traitement par pétrissage, et choisie de manière à ne pas être supérieure à une quantité ordinaire, dans la plage de 0,4 à 1 partie pour 100 parties de caoutchouc, tandis que la teneur dudit agent colorant pour conférer un pouvoir collant au métal est choisie de manière à ne pas être inférieure à une quantité suffisante pour présenter un effet conférant un pouvoir collant au métal, et choisie de manière à ne pas être supérieure à une quantité afin de ne pas inhiber une distorsion permanente par compression dudit corps élastique, dans la plage de 0,1 à 0,7 parties pour 100 parties de caoutchouc.

10. Poulie avec élément d'amortissement, **caractérisée par** :
un moyeu ;
une poulie réalisée en métal ; et
un élément en caoutchouc vulcanisé introduit à force est fixé dans un espace annulaire formé entre ledit moyeu et ladite poulie,
dans laquelle ledit élément en caoutchouc vulcanisé est réalisé d'un dérivé vulcanisé d'un matériau en mélange de caoutchouc contenant de l'acide stéarique dans un caoutchouc éthylène-propylène à titre de base, et ledit matériau en mélange de caoutchouc contient en outre un dérivé de quinone dans lequel est introduit un groupe halogène à titre d'agent collant pour conférer un pouvoir collant au métal.

11. Poulie avec élément d'amortissement selon la revendication 10, dans laquelle ledit dérivé de quinone est du chloranil (nom du composé : 2,3,5,6-tétrachloroquinone), et une limite supérieure de la teneur dudit dérivé de quinone est de 0,7 parties en poids pour 100 parties en poids dudit caoutchouc éthylène-propylène.

12. Poulie avec l'élément d'amortissement selon la revendication 11, dans laquelle une limite inférieure de la teneur dudit acide stéarique est de 0,4 parties en poids pour 100 parties en poids dudit caoutchouc éthylène-propylène.

13. Poulie avec élément d'amortissement selon toutes les revendications précitées, dans laquelle ledit élément en caoutchouc vulcanisé est moulé par un processus de moulage-extrusion.
